Europäisches Patentamt

European Patent Office

Office européen des brevets

(11) Veröffentlichungsnummer: **0 468 132 A2**

# EUROPÄISCHE PATENTANMELDUNG

(21) Anmeldenummer: **91102774.6**

(22) Anmeldetag: **26.02.91**

(51) Int. Cl.5: **B01D 39/14**, B01D 46/24, F01N 3/02

(30) Priorität: **28.06.90 DE 4020553**

(43) Veröffentlichungstag der Anmeldung: **29.01.92 Patentblatt 92/05**

(84) Benannte Vertragsstaaten: **AT CH DE ES FR GB IT LI SE**

(71) Anmelder: **FILTERWERK MANN & HUMMEL GMBH**
**Hindenburgstrasse 37- 45 Postfach 409**
**W-7140 Ludwigsburg(DE)**

(72) Erfinder: **Erdmannsdörder, Hans**
**Robert-Koch-Strasse 24**
**W-7140 Ludwigsburg(DE)**
Erfinder: **Fischer, Helmuth**
**Austrasse 45**
**W-7140 Ludwigsburg(DE)**
Erfinder: **Röcker, Helmut**
**Neusätzstrasse 8**
**W-7121 Löchgau(DE)**
Erfinder: **Wolff, Hartmut**
**Rosenweg 4**
**W-7148 Remseck 2(DE)**
Erfinder: **Zundel, Fritz**
**Eichenweg 20**
**W-7122 Besigheim(DE)**

(74) Vertreter: **Voth, Gerhard, Dipl.-Ing.**
**FILTERWERK MANN + HUMMEL GMBH**
**Postfach 409**
**W-7140 Ludwigsburg(DE)**

(54) **Verfahren zur Herstellung von Russfilterkerzen.**

(57) 2.1 Es wird ein Verfahren zur Herstellung von Rußfilterkerzen, die als Filtermaterial ein im Kreuzwickel aufgespultes Garn aufweisen, angegeben, bei dem hochtemperaturbeständiges aus feinen Einzelfasern bestehendes Garn mit Garndrehung aufgerauht wird, damit die Filterkerzen als Rußfilter im Abgasstrom einer Brennkraftmaschine eingesetzt werden können. Das Verfahren soll möglichst einfach ablaufen und ein aufgerauhtes Garn sicherstellen, das die geforderte Filterwirkung gewährleistet.

2.2 Gemäß dem Verfahren werden vor dem Aufspulen büschelweise die Fasern des Garns aufgebrochen, indem das Garn unter Zugspannung über eine sich bewegende Rauhfläche gezogen wird, wobei die Bewegungsrichtung der Rauhfläche von der Bewegungsrichtung des Garns abweicht und der Winkel Alpha zwischen der Bewegungsrichtung der Rauhfläche und der Bewegungsrichtung des Garns im Berührungsbereich des Garns mit der Rauhfläche in Abhängigkeit von der Drehung des Garns bestimmt wird.

2.3 Herstellung von Rußfilterkerzen mit einem aufgerauhten hochtemperaturbeständigen aus feinen Einzelfasern bestehenden Garn.

Fig. 1

Die Erfindung betrifft ein Verfahren zur Herstellung von Rußfiltern nach dem Oberbegriff des Patentanspruchs 1. Derartige Rußfilter werden vorzugsweise im Abgasstrom einer Brennkraftmaschine eingesetzt.

Aus der DE 36 02 153 A1 sind Rußfilter bekannt, die auf Stützrohre im Kreuzwickel aufgespulte Siliciumdioxidfasern aufweisen. Zur Herstellung der einzelnen Rußfilterkerzen ist es dabei erforderlich, die entsprechende Faser einer Behandlung zu unterziehen, bei der einerseits eine ausreichende Fiterwirkung erreicht und andererseits eine kostengünstige Fertigung ermöglicht wird. Aus der Textiltechnik, beispielsweise durch die DE-OS 33 35 752 ist es bekannt, zur Herstellung von Effektgarnen diese über einer Rauhwalze aufzurauhen. Die dabei verarbeiteten Garne sind jedoch nicht für die wesentlich strengeren technischen Anforderungen bei Rußfiltern geeignet. Es können nämlich mit dem bekannten Verfahren aus der Textiltechnik keine hochtemperaturbeständigen Garne so aufgerauht werden, daß sie eine für ein Rußfilter ausreichende Filterwirkung aufweisen.

Der vorliegenden Erfindung liegt daher das Problem zugrunde, ein Verfahren anzugeben, welches die Herstellung von funktionstüchtigen und eine ausreichende Filterwirkung aufweisenden Rußfilterkerzen mit im Kreuzwickel aufgespultem Garn bei ausreichender Festigkeit des Garns ermöglicht.Dabei soll das Verfahren einfach, zuverlässig und kostengünstig durchführbar sein.

Dieses Problem wird durch die kennzeichnenden Merkmale des Patentanspruchs 1 gelöst.

Das hochtemperaturbeständige Garn, das aus einer Vielzahl von von gruppenweise gegeneinander verdrehten Einzelfasern besteht, benötigt diese sogenannte Drehung insbesondere wegen Beschädigungen an der Garnoberfläche aus Gründen der Festigkeit. Je nach Richtung wird diese Drehung als S- oder Z-Drehung (auch S- oder Z-Schlag bezeichnet). Dabei ist die Drehung der Einzelfasern zur Richtung der Fäden immer gegenläufig zu der Z- bzw. S-Drehung der Fäden zur Herstellung des entgültigen Garns. Infolgedessen ist es möglich, daß an der Oberfläche des Garns büschelweise Fasern durch die rauhe Oberfläche der Rauhfläche aufgebrochen werden können. Wichtig ist dabei, daß das Garn unter Zugspannung gehalten wird, damit ein definiertes Aufrauhen möglich ist. Infolge der auf dem Garn liegenden Zugspannung spreizen sich die aufgebrochenen Fasern ab, so daß ein Garn entsteht, das mindestens in einzelnen Oberflächenbereichen für die spätere Filterwirkung notwendige abstehende Fasern aufweist. Durch die Bewegung der Rauhfläche kann der Rauhvorgang verstärkt und beschleunigt werden. Wichtig ist, daß das büschelweise Aufbrechen der Fasern des Garns im wesentlichen an der Garnoberfläche erfolgt, da andernfalls die Festigkeit des Garns nicht mehr gewährleistet ist. Durch die verschieden möglichen Drehungen des Garns (S- bzw. Z-Drehung) und auch der Anzahl der Drehungen pro Garnmeter wurde festgestellt, daß der Winkel Alpha zwischen der Bewegungsrichtung der Rauhfläche und der Bewegungsrichtung des Garns im Berührungsbereich des Garns mit der Rauhfläche einen Einfluß auf die Filterwirkung des aus dem aufgerauhten Faden hergestellten Wickelfilters hat.

Bei der sich bewegenden Rauhfläche kann es sich um eine Rauhscheibe, Rauhwalze oder jede andere geeignete Rauhfläche handeln. Wesentlich ist lediglich, daß in dem Berührungsbereich des Garns mit der Rauhfläche die entsprechenden Abhängigkeiten beachtet werden.

Zweckmäßigerweise wird der Winkel Alpha so gewählt, daß bei dem mit der Rauhfläche in Berührung kommenden Teil des Garns die Fäden quer zur Bewegungsrichtung der Rauhfläche verlaufen. Es wurde nämlich festgestellt, daß, wenn diese Forderung nicht erfüllt ist, das Garn zwar mehr oder weniger stark aufgerauht wird, jedoch die anschließend aufgespulte Filterkerze nicht die geforderten Eigenschaften aufweist. Der Winkel Alpha ist somit sehr davon abhängig, welche Garndrehung gewählt wird. In zweiter Linie ist es dann von Bedeutung, wieviel Drehungen pro Garnmeter das Garn aufweist, da dies die Steigung der Fäden beeinflußt.

Als besonders vorteilhaft hat sich erwiesen, eine Rauhwalze zu verwenden, wobei zweckmäßigerweise das Garn bogenförmig über die Oberfläche geführt wird. Dies hat den Vorteil, daß sich die Bewegung der Rauhfläche einfach realisieren läßt und außerdem ein von der Rauhigkeit der Oberfläche abhängiger, den gewünschten Bedürfnissen entsprechender Aufrauhvorgang durchgeführt werden kann.

Zweckmäßigerweise ist der Winkel Alpha kleiner als 90 Grad, so daß die Bewegungsrichtung der Rauhfläche mit der Richtung einer Bewegungskomponenten der Bewegungsrichtung des Garns übereinstimmt. Es hat sich dabei herausgestellt, daß besonders dann eine gute Aufrauhung erfolgt, wenn die Geschwindigkeitsdifferenz zwischen der Geschwindigkeit mit der der Faden gezogen und die Rauhfläche bewegt wird, in einem Bereich von 0,7 m/sec bis 7 m/sec liegt.

Zur Verbesserung der Aufrauhung, was in Abhängigkeit von der Art des verwendeten Garns erforderlich sein kann, können die aufgebrochenen Fasern im Anschluß an die Rauhfläche in einem Luftstrom mit hoher Geschwindigkeit in sich vom Garn wegerstreckenden Einzelfasern aufgefächert werden. Dabei kann die Geschwindigkeit des Luftstroms an der Oberfläche des Garns mindestens 50 m/sec und höchstens 200 m/sec betragen.

Durch den Luftstrom werden die bis dahin evtl. noch anliegenden aber bereits aufgebrochenen Fasern aufgespreizt und evtl. einzelne lose Fasern, die die Filterwirkung beeinträchtigen könnten, weggeblasen. Um ein besonders wirkungsvolles Auffächern zu erreichen, wird zweckmäßigerweise das Garn in Garnlängsrichtung und im wesentlichen quer zum Luftstrom bewegt. Um einen besonders wirkungsvollen Luftstrom zu erhalten, ist es vorteilhaft, das Garn mittels einer oder mehrerer über den Umfang des Garns verteilter Düsen anzublasen.

Durch Absaugen von losen Faserteilen kann einerseits verhindert werden, daß diese in die Umgebung gelangen, und zusätzlich eine häufige Unterbrechung wegen Zusetzen der Anlage durch lose Faserteilchen vermieden werden.

Durch das erfindungsgemäße Verfahren ist es somit möglich, Rußfilterkerzen herzustellen, die in der Lage sind, eine gute Filterwirkung bei gleichzeitiger kontinuierlicher und kostengünstiger Fertigung zu erzielen, und als wirksames Rußfilter im Abgasstrom einer Brennkraftmaschine eingesetzt werden können.

Ein Ausführungsbeispiel ist anhand der beigefügten Zeichnungen näher erläutert. Die Zeichnungen stellen schematisch dar:

Figur 1     eine Draufsicht auf die Garnführung über eine Rauhwalze

Figur 2     die Stirnseite der Rauhwalze mit dem darübergeführten Garn und

Figur 3     einen vergrößerten Ausschnitt aus der Rauhfläche mit der Drehung der Fäden des Garns.

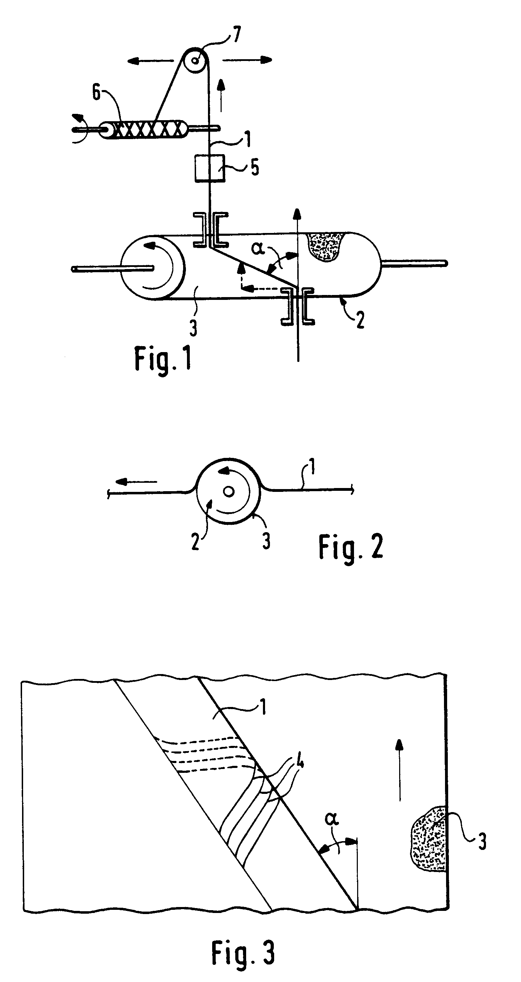

Gemäß Figur 1 wird das Garn 1 in Pfeilrichtung schräg über eine sich drehende Rauhwalze 2 gezogen. Die Drehrichtung der Rauhwalze stimmt mit der Zugrichtung des Garns überein, so daß im Bereich der Rauhfläche 3 eine Richtungskomponente des Garns 1 mit der Drehrichtungskomponente der Rauhfläche übereinstimmt. Infolgedessen ist auch der Winkel Alpha der Bewegungsrichtung der Rauhfläche und der Bewegungsrichtung des Garns im Berührungsbereich des Garns kleiner als 90 Grad. Mit der Ziffer 5 ist eine Anblas- und Absaugvorrichtung gezeigt, die je nach Beschaffenheit des Garns zur Auffächerung beitragen kann. Das aufgerauhte Garn wird über eine horizontal bewegbare Umlenkrolle 7 zu einer Rußfilterkerze 6 mit Kreuzwickel gewickelt.

Figur 2 zeigt die Stirnseite der Rauhwalze 2, bei der das Garn über eine Kreisbogenfläche gezogen wird, um möglichst große Aufrauhbereiche zu erhalten. Durch die gleichzeitige Schrägführung des Garns gemäß Figur 1 wird zusätzlich noch einer Abnützung der Rauhfläche 3 in nur einem engen Bereich entgegengewirkt.

In Figur 3 ist ein Ausschnitt aus der Rauhfläche 3 vergrößert gezeigt, über den ein Garn 1 gezogen wird. Das Garn 1 besteht aus einzelnen Fäden 4, die ihrerseits wiederum aus einzelnen verdrehten nicht dargestellten Fasern bestehen. Bei der hier dargestellten Garndrehung handelt es sich um die sogenannte Z-Drehung, da der Fadenverlauf mit dem Mittelteil des Buchstaben Z übereinstimmt. Auf der Rückseite des Garns verlaufen die Fäden 4 dann in der gestrichelt dargestellten Richtung. Man sieht, daß bei dem augenblicklich dargestellten Winkel Alpha die mit der Rauhfläche 3 in Berührung kommenden Fäden 4 quer zu der durch den Pfeil gekennzeichneten Bewegungsrichtung der Rauhfläche 3 verlaufen. Bei der dargestellten Drehung und der Zahl der Drehungen pro Garnmeter würde bei einem anderen Winkel Alpha dies nicht mehr gewährleistet sein, so daß infolgedessen sich die Wirkungsweise des aufgerauhten Fadens verschlechtert. Es ist zu erwarten, daß das beste Aufrauhergebnis dann erzielt wird, wenn die Fadenrichtung senkrecht auf der Bewegungsrichtung der Rauhfläche steht. Jedoch dürften technisch bedingte von dieser Optimalstellung abweichende Richtungen nur einen geringfügigen Einfluß auf das aufgerauhte Garn und damit auf die Filterwirkung haben.

**Patentansprüche**

1. Verfahren zur Herstellung von Rußfilterkerzen, die als Filtermaterial ein hochtemperaturbeständiges aus feinen Einzelfasern in Kreuzwickel aufgespultes Garn aufweisen, bei dem ein Garn verwendet wird, dessen feine Einzelfasern zu Fäden verdrillt sind, die ihrerseits gegen die Drehrichtung der Einzelfasern zu dem Garn verdreht sind, dadurch gekennzeichnet, daß das Garn (1) vor dem Aufspulen durch büschelweises Aufbrechen von Fasern aufgerauht wird, indem das Garn (1) unter Zugspannung über eine sich bewegende Rauhfläche (3) gezogen wird, wobei die Bewegungsrichtung der Rauhfläche (3) und die Bewegungsrichtung des Garns (1) einen Winkel Alpha einschließen und der Winkel Alpha im Berührungsbereich des Garns (1) mit der Rauhfläche (3) in Abhängigkeit von der Garndrehung und den Drehungen pro Garnmeter bestimmt wird.

2. Verfahren nach Anspruch 1, dadurch gekennzeichnet, daß der Winkel Alpha so gewählt wird, daß bei dem mit der Rauhfläche (3) in Berührung kommenden Teil des Garns (1) die Fäden (4) quer zur Bewegungsrichtung der Rauhfläche (3) verlaufen.

3. Verfahren nach Anspruch 1 oder 2, dadurch gekennzeichnet, daß als Rauhfläche (3) die Oberfläche einer Rauhwalze (2) verwendet wird.

4. Verfahren nach Anspruch 3, dadurch gekennzeichnet, daß das Garn (1) bogenförmig über die Oberfläche der Rauhwalze (2) geführt wird.

5. Verfahren nach mindestens einem der vorangegangenen Ansprüche, dadurch gekennzeichnet, daß der Winkel Alpha kleiner als 90 Grad ist.

6. Verfahren nach Anspruch 5, dadurch gekennzeichnet, daß die Geschwindigkeitsdifferenz, zwischen der Geschwindigkeit mit der das Garn (1) gezogen und die Rauhfläche (3) bewegt wird, in einem Bereich von 0,7 m/sec bis 7 m/sec liegt.

7. Verfahren nach mindestens einem der vorangegangenen Ansprüche, dadurch gekennzeichnet, daß im Anschluß an die Rauhflälche (3) die aufgebrochenen Fasern in einem Luftstrom mit hoher Geschwindigkeit in eine sich vom Garn (1) wegerstreckende Lage aufgefächert werden.

8. Verfahren nach Anspruch 7, dadurch gekennzeichnet, daß die Geschwindigkeit des Luftstroms an der Oberfläche des Garns (1) mindestens 50 m/sec und höchstens 200 m/sec beträgt.

9. Verfahren nach Anspruch 7 oder 8, dadurch gekennzeichnet, daß das Garn (1) mit den aufgebrochenen Fasern in Garnlängsrichtung und im wesentlichen senkrecht zum Luftstrom bewegt wird.

10. Verfahren nach mindestens einem der vorangegangenen Ansprüche 7 bis 9, dadurch gekennzeichnet, daß das Garn (1) mittels einer oder mehrerer über den Umfang des Garns (1) verteilter Düsen angeblasen wird.

11. Verfahren nach mindestens einem der vorangegangenen Ansprüche, dadurch gekennzeichnet, daß der beim Aufrauhen entstehende Faserstaub abgesaugt wird.

Fig. 1

Fig. 2

Fig. 3